# EUROPEAN PATENT APPLICATION

(11) **EP 4 134 174 A1**
(43) Date of publication of application: **15.02.2023**
(21) Application number: 21785322.5
(22) Date of filing: 01.02.2021
(51) Int. Cl.: B07C 5/342, B65G 1/137

(54) **DATA COLLECTION METHOD, DATA COLLECTION SYSTEM, DATA COLLECTION DEVICE, DATA PROVISION METHOD, AND COMPUTER PROGRAM**

(30) Priority: 10.04.2020 JP 2020071174
(71) Applicant: Tsubakimoto Chain Co., Osaka 530-0005 (JP)
(72) Inventor: MATSUMURA, Shota, Osaka-shi, Osaka 530-0005 (JP); CHIDA, Akisato, Osaka-shi, Osaka 530-0005 (JP); KUDO, Hiroyuki, Osaka-shi, Osaka 530-0005 (JP)
(74) Representative: TBK
(86) International application number: PCT/JP2021/003492
(87) International publication number: WO 2021/205721

(57) **Abstract**

Provided are a data collection method, a data collection system, a data collection device, a data provision method, and a computer program for autonomously collecting data in stages in classification. This data collection method includes a process in which: identification codes for identifying products are acquired from a classifier that includes a reader for reading the identification codes, the classifier transporting the products to different classification locations on the basis of the identification codes and carrying out classification, the identification codes having been read by the reader; image data of the products identified by the acquired identification codes is acquired from a camera attached so as to photograph the products transported by the classifier; and the acquired image data is stored in association with the acquired identification codes.

## Description

### [Technical Field]

The present invention relates to a data collection method, a data collection system, a data collection device, a data providing method, and a computer program that collect data used in a sorting machine which sorts loaded articles by transport destination.

### [Background Art]

A sorting machine that sorts articles by transport destination in order to transport the articles is used in a distribution center that handles the shipment of a large number of articles. A sorting worker reads an article identification code attached to an article with a reader to load the article to the sorting machine. When the article identification code is read, the sorting machine identifies the article loaded to a tray and discharges the article to a container for packing the identified article or a chute unit in which a box is prepared.

In a large-scale distribution center, the number of articles is enormous. In a case in which there are many types of articles regardless of the scale, the load on the sorting worker is large, and automation of the identification of articles is desired. Automatic identification that identifies an article as an object using a learning model obtained by deep learning from data of an image obtained by imaging the appearance of the article has been put into practical use. Patent Document 1 discloses a method that determines an error in annotation labeling image data with identification data and provides training data for improving the accuracy of identification.

### [Prior Art Document]

### [Patent Document]

[Patent Document 1] Japanese Patent Laid-Open Publication No. 2020-030692

### [Summary of Invention]

### [Problems to be Solved by Invention]

As disclosed in Patent Document 1, in the related art, annotations are visually labeled by humans. In the human visual labeling, the time required to accumulate training data to the extent that accuracy is guaranteed is not likely to keep up with a product cycle in which the appearance of a product changes depending on the day, month, and season.

An object of the invention is to provide a data collection method, a data collection system, a data collection device, a data providing method, and a computer program that automatically collect data in a sorting stage.

### [Means for Solving Problems]

A data collection method according to an embodiment of the present disclosure includes: acquiring, from a sorting machine that includes a reader reading an identification code for identifying an article and transports the article to a different sorting destination on the basis of the identification code to sort the article, the identification code read by the reader; acquiring image data of the article identified by the acquired identification code from a camera that is attached so as to image the article transported by the sorting machine; and storing the acquired image data so as to be associated with the acquired identification code.

A data collection system according to an embodiment of the present disclosure includes: a sorting machine that includes a reader reading an identification code for identifying an article and transports the article to a different sorting destination on the basis of the identification code to sort the article; a camera that is attached so as to image the article transported by the sorting machine; and a data collection device that is connected to the sorting machine and the camera and collects image data of the article. The data collection device acquires the identification code read by the reader, acquires the image data of the article identified by the acquired identification code from the camera, and stores the acquired image data in a storage unit so as to be associated with the acquired identification code.

A data collection device according to an embodiment of the present disclosure includes: a means connected to a sorting machine that includes a reader reading an identification code for identifying an article and transports the article to a different sorting destination on the basis of the identification code to sort the article; a means for acquiring the identification code read by the reader; a means for acquiring image data of the article identified by the acquired identification code from a camera that is attached so as to image the article transported by the sorting machine; and a means for storing the acquired image data so as to be associated with the acquired identification code.

A computer program according to an embodiment of the present disclosure causes a computer, which is connected to a sorting machine that includes a reader reading an identification code for identifying an article and transports the article to a different sorting destination on the basis of the identification code to sort the article, to execute: acquiring the identification code read by the reader; acquiring image data of the article identified by the acquired identification code from a camera that is attached so as to image the article transported by the sorting machine; and storing the acquired image data so as to be associated with the acquired identification code.

In the data collection method, the data collection system, the data collection device, the data providing method, and the computer program according to the present disclosure, the identification code acquired from the reader reading the identification code of the article by the sorting machine is automatically associated with the image data of the article. It is possible to sequentially collect the labeled image data with high accuracy, without disturbing the operation of the sorting machine itself. The identification code is, for example, an EAN (JAN) code that is commonly used in the world. There are a wide variety of objects to be sorted by the sorting machine as long as the objects are articles that can be identified by identification codes. Therefore, it is possible to collect training data not for identification for two choices, such as good/bad, but for identification for a plurality of choices from image data of a wide variety of types of articles.

It is possible to associate image data acquired by imaging the same article at different angles using a plurality of cameras, and it is expected that the accuracy of identification will be improved in a case in which an identification model is trained using the image data.

The data collected by the data collection method according to the present disclosure includes the image data, which is obtained by imaging the article transported and is acquired from the camera attached to the sorting machine that transports the article to a different sorting destination to sort the article, and the identification code which is used to identify the article captured in the image data and is read by the reader included in the sorting machine. The data is used to train the identification model that outputs data for identifying the article and accuracy in a case in which the image data of the article is input.

The data collection method according to the embodiment of the present disclosure may include a process of storing the acquired image data so as to be associated with the imaging date and time of the image data.

In the data collection method according to the present disclosure, the imaging date and time of the image data is also associated. When the sorting machine is operated, it is possible to collect data at all times without disturbing the operation of the sorting machine. Therefore, the appearance of the article that is likely to change depending on the date and season can be collected for each period.

In the data collection method according to the embodiment of the present disclosure, image data newly acquired from the camera is input to an identification model that has been trained so as to output data for identifying the article and accuracy on the basis of the stored image data and identification code in a case in which the image data is input. It is determined whether or not the data output from the identification model is matched with the identification code read by the reader for the article captured in the image data, and it is determined whether or not the accuracy is equal to or greater than a predetermined value. In a case in which it is determined that the accuracy is less than the predetermined value, the newly acquired image data is stored so as to be associated with the identification code.

In the data collection method according to the present disclosure, the identification model that has been trained with the collected image data and identification code is used. In a case in which the identification accuracy of the identification model is reduced, image data is collected for re-training. In a case in which the appearance of the article is changed to be out of the learning range of the identification model, it is possible to respond to the case.

In the data providing method according to the embodiment of the present disclosure, the image data is provided in association with the identification code of the article from a storage device that stores data stored by any one of the above-described data collection methods.

The collected image data is not only used for identification by an identification model that replaces the reader of the sorting machine, but is also provided from the storage device to other communication devices. The image data may be used for training in other communication devices.

### [Effects of Invention]

According to the present disclosure, it is possible to collect image data automatically associated with a highly versatile identification code read by a sorting machine that is used to sort articles.

### [Brief Description of Drawings]

FIG. 1 is a schematic diagram illustrating a data collection method according to an embodiment.
FIG. 2 is a block diagram illustrating a configuration of a data collection device according to Embodiment 1.
FIG. 3 is a flowchart illustrating an example of a procedure of a data collection process by a control unit.
FIG. 4 is a diagram illustrating an example of the content of data collected by the data collection process.
FIG. 5 is a block diagram illustrating a configuration of a data collection system according to Embodiment 2.
FIG. 6 is a flowchart illustrating an example of a procedure of a data collection process according to Embodiment 2.
FIG. 7 is a schematic diagram illustrating an identification model trained on the basis of collected data.
FIG. 8 is a block diagram illustrating a configuration of a data collection system according to Embodiment 3.
FIG. 9 is a flowchart illustrating an example of a procedure of a data collection process according to Embodiment 3.

### [Mode for Carrying out Invention]

The present disclosure will be described in detail with reference to the drawings showing embodiments.

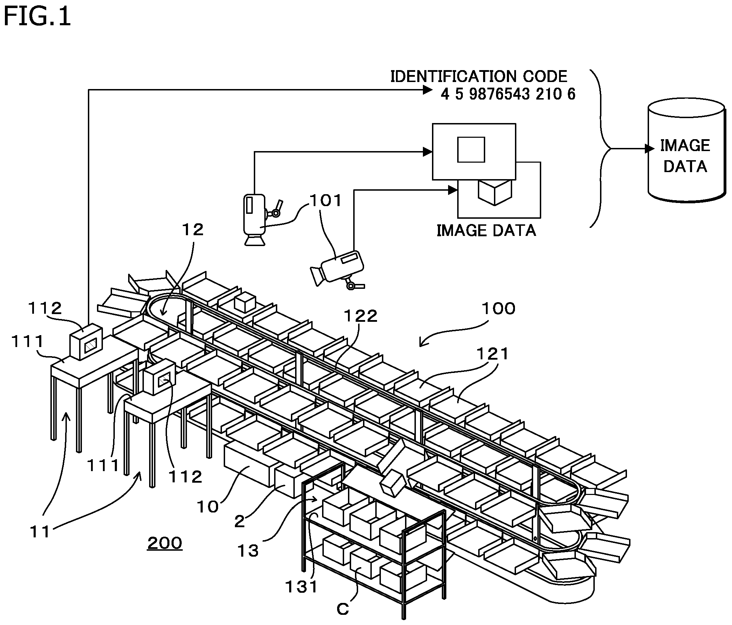

FIG. 1 is a schematic diagram illustrating a data collection method according to this embodiment. A data collection system 200 includes a sorting machine 100, a camera 101 that is attached such that a tray 121 of the sorting machine 100 is included in an angle of view of the camera 101, and a data collection device 2 that is connected to the camera 101 and a control unit 10 of the sorting machine 100. The data collection device 2 collects and stores image data captured by the camera 101 and an identification code of an article read by the sorting machine 100 so as to be associated with each other.

The sorting machine 100 is divided into a loading unit 11, a transport unit 12, and a chute unit 13.

The loading unit 11 includes a workbench 111 and a reader 112 that reads an identification code attached to an article. The reader 112 is a bar code reader, a two-dimensional code reader, or a radio frequency identifier (RFID) reader. The reader 112 may be a reader using near field wireless communication. The identification code is, for example, an EAN (JAN) code. The identification code may also be a code for identifying a book or a magazine. The identification code may also be CODE128, NW-7, CODE39, or ITF. As illustrated in FIG. 1, the loading unit 11 may include a plurality sets of the workbenches 111 and the readers 112.

The transport unit 12 includes a plurality of trays 121 that are connected to each other and travel along a rail 122 provided in an endless annular track and an inclination mechanism that inclines the trays 121. As illustrated in FIG. 1, the rail 122 on which the plurality of trays 121 travel may be provided such that the plurality of trays 121 circulate in parallel to a horizontal plane, may be provided such that the plurality of trays 121 travel in a straight line to pass through each other in an up-down direction, or may be provided such that the plurality of trays 121 circulate in a spiral shape.

The plurality of trays 121 are provided with sensors for determining whether or not the trays 121 are empty. The sensor is, for example, a weight sensor that is attached to each of the plurality of trays 121. As another example, the sensor may be a sensor which determines that an article has been placed on the tray 121 and determines the size of the article using a photoelectric sensor or a displacement sensor. As still another example, the sensor is an image sensor that captures an image of the tray 121 and can determine whether or not the tray 121 is empty by comparison with the image of the tray 121 in an empty state.

Identification data is attached to each of the plurality of trays 121. The transport unit 12 includes a detection mechanism for detecting at which position at least a specific tray 121 among the plurality of trays 121 is present in the transport unit 12. The transport unit 12 can detect the position of each of the plurality of trays in the transport unit 12 according to the connection order of the trays 121. The detection mechanism is, for example, a mechanism including an encoder that is attached to a motor of a driving unit for moving the trays 121 and a detection unit that receives a pulse signal output from the encoder and detects the position. As another example, the detection mechanism is a mechanism that performs image analysis on image data obtained from a camera for capturing the image of the trays 121 to detect the position of at least a specific tray. As still another example, the detection mechanism may detect the position using a reader that reads an identification tag attached to the tray 121 at a specific position.

The inclination mechanism for inclining the trays 121 is implemented by, for example, a configuration in which a support portion for supporting the trays 121 on the rail 122 can be bent. The inclination mechanism may be a mechanism that pushes up a portion of a lower surface of the tray 121 to incline the tray 121. The transport unit 12 can incline the tray 121 designated by the control unit 10 at a designated position.

The chute unit 13 is provided in parallel to a portion of the rail 122 for the trays 121 of the transport unit 12 and includes a receiving unit 131 that receives the article unloaded from the tray by the inclination of the tray 121. For example, as illustrated in FIG. 1, a distribution material C, which is a small container or a cardboard box used for transport, is placed on the receiving unit 131. The receiving unit 131 is a divided workbench, and a packing worker may pack the article unloaded to the workbench into the distribution material C.

The loading unit 11, the transport unit 12, and the chute unit 13 of the sorting machine 100 are connected to the control unit 10 by signal lines and are controlled by the control unit 10. The control unit 10 detects that the identification code has been read and the identification code at the timing when a sorting worker operates the reader 112 in the loading unit 11 to read the identification code of the article. The control unit 10 acquires data for identifying the tray 121, to which the article has been loaded, for the detected identification code using the output of the sensor 123 and the detection mechanism for the tray 121. Then, the control unit 10 temporarily stores information indicating the tray 121 including the article and the identification code of the article. The control unit 10 determines the tray 121 to be inclined by the chute unit 13 on the basis of data of a sorting plan given in advance and instructs the transport unit 12 of the data for identifying the determined tray 121. The transport unit 12 inclines the designated tray 121 using the inclination mechanism on the basis of the position of the tray 121 detected by the transport unit 12. The control unit 10 may output, for example, the number and type of articles to be loaded to the distribution material C to a certain transport destination to the chute unit 13. As described above, the sorting machine 100 automatically performs sorting on the basis of the sorting plan in response to the operation of the sorting worker that reads the identification code of the article with the reader 112 of the loading unit 11 of the sorting machine 100 and loads the article.

In the data collection method according to the present disclosure, the data collection device 2 collects the image data of the article obtained by imaging the tray 121, to which the article has been loaded from the loading unit 11, using the camera 101 in association with the identification code read by the loading unit 11. The camera 101 is provided so as to image the trays 121 at different angles as illustrated in FIG. 1. In the example illustrated in FIG. 1, two cameras 101 are provided. The data collection device 2 collects image data captured by the camera 101 at different angles. The number of cameras 101 is two in FIG. 1, but may be one, or three or more.

The sorting machine 100 illustrated in FIG. 1 is a type that transports articles with a plurality of trays. The sorting machine 100 is not limited to this type and may be a type in which the transport unit 12 transports the article to the chute unit 13 with a conveyor (for example, rollers or slats).

In this data collection method, it is possible to collect image data together with the identification codes for reliably identifying the articles without increasing the amount of work of the sorting worker, that is, without changing a sorting operation method using the sorting machine 100. In the data collection method according to this embodiment, the data collection device 2 can collect the image data of the article according to a difference in the type, manufacturer, and producer of the article identified by the identification code. The EAN code is used as the identification code, which makes it easy to distinguish a business operator. Therefore, it is also easy to collect image data not only for each article identified by the identification code but also for each manufacturer. In addition, since the identification code is used, the data collection device 2 can collect image data for identifying a wide variety of articles, instead of performing determination for two or three choices such as good/bad or A/B/C. In the data collection method, the data collection device 2 can also collect image data by period or by season. There are various ways to apply the collected image data. The collected image data may be used to omit the work of reading the identification code with the reader in the loading unit 11 of the sorting machine 100. A learning model that is trained with the collected image data can be used to specify the identification code of the article from the image obtained by imaging the article. The collected image data may be used to identify the article at a retail store which is the transport destination of the article.

Hereinafter, the configuration of the data collection device 2 for implementing the above-described data collection method will be described using a plurality of embodiments.

### (Embodiment 1)

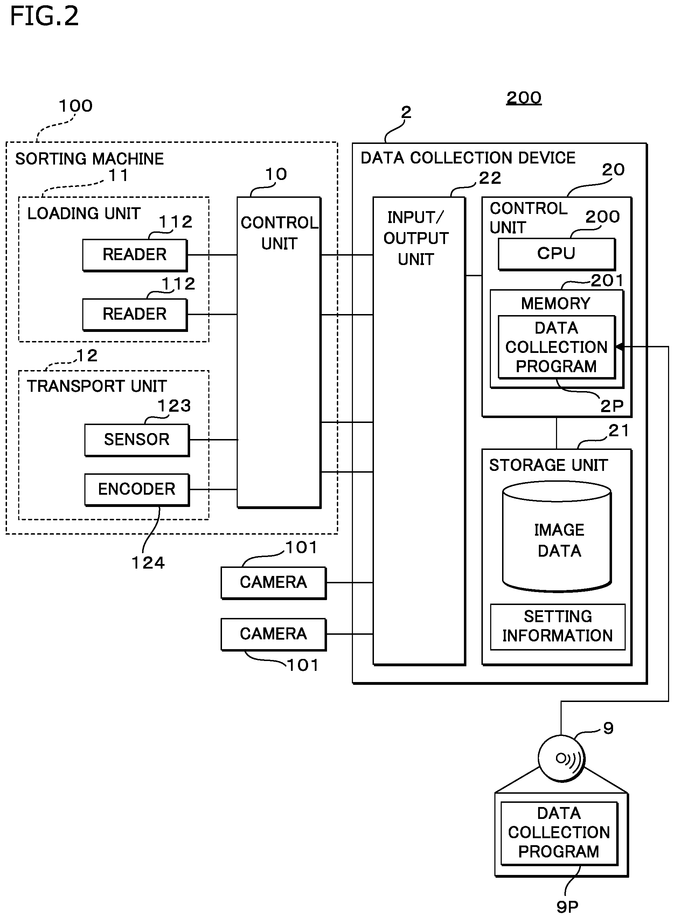

FIG. 2 is a block diagram illustrating the configuration of a data collection device 2 according to Embodiment 1. The data collection device 2 includes a control unit 20, a storage unit 21, and an input/output unit 22. The data collection device 2 may be a programmable logic controller (PLC). The control unit 20 includes a central processing unit (CPU) 200 and a non-volatile memory 201. The control unit 20 may be a microcontroller. In the control unit 20, the CPU 200 executes a process based on a data collection program 2P stored in the memory 201 to collect data.

The storage unit 21 is a non-volatile storage medium such as a hard disk or a solid state drive (SSD). The collected image data is stored in the storage unit 21 so as to be associated with an identification code of an article included in the image data. The image data may be stored so as to be associated with an imaging time.

Setting information for data collection, which will be described below, is stored in the storage unit 21. The setting information includes, for example, information for determining the timing when the article identified by the identification code can be captured within the angle of view by the camera 101 after the identification code is read by the reader 112. The setting information may be time or a pulse count as described below.

The input/output unit 22 is an interface that is connected to the sorting machine 100 and the camera 101. The control unit 20 can acquire the identification code read by the reader 112 from the sorting machine 100 using the input/output unit 22. The control unit 20 can acquire data from the sensor 123 for specifying the tray 121, to which the article has been loaded, using the input/output unit 22. In a case in which the transport unit 12 of the sorting machine 100 is a conveyor type, the control unit 20 can acquire data indicating the range (virtual tray) of the transport unit 12 in which the article identified by the identification code is placed using the input/output unit 22. The range in which the article is placed can be determined by the size of the article measured by the sensor 123. The control unit 20 can acquire data indicating the position of a target tray 121 using the input/output unit 22. The data indicating the position is, for example, the encoder 124 of the motor that drives the tray 121, and the control unit 20 can acquire the position of the tray 121 by the pulse count from the encoder 124. The control unit 20 receives an image signal output to a monitor from the camera 101 using the input/output unit 22 and can acquire the image data of the image obtained by imaging the article from the image signal at the determined timing. As illustrated in FIG. 2, the input/output unit 22 may be connected to the sorting machine 100 by different signal lines for each signal acquired from the sorting machine 100.

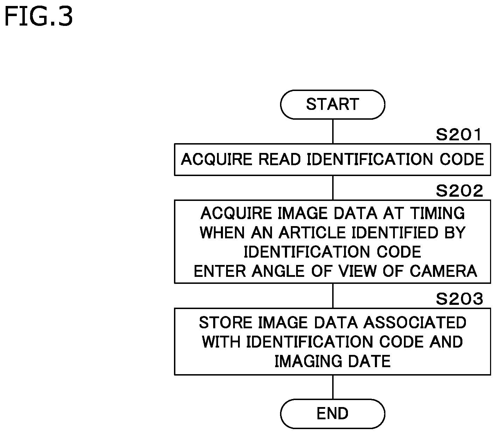

FIG. 3 is a flowchart illustrating a procedure of a data collection process by the control unit 20. The control unit 20 continuously executes the following process on the basis of the data collection program 2P during operation.

The control unit 20 acquires the identification code read by the reader 112 (Step S201). Therefore, whenever the control unit 10 of the sorting machine 100 receives the identification code from the reader 112 of the loading unit 11, it outputs the identification code to the data collection device 2 together with data for identifying the reader 112. The input/output unit 22 may receive signals obtained by branching the signal output from the reader 112 of the loading unit 11 to the control unit 10, and the control unit 20 may acquire the identification code without passing through the control unit 10.

The control unit 20 acquires the image data from the camera 101 at the timing when the article identified by the acquired identification code enters the angle of view of the camera 101 (Step S202). The timing when the image data is acquired is determined, for example, by the layout of the sorting machine 100, the installation position of the camera 101, and the waiting time from the acquisition of the identification code which has been set according to the transport speed of the transport unit 12. The waiting time is stored as the setting information in the storage unit 21 or a non-volatile memory in advance.

The timing when the image data is acquired may be determined by a pulse count corresponding to the travel distance of the tray 121 (the position and the range in the case of the conveyor type) output from the control unit 10 of the sorting machine 100. The pulse count is stored as the setting information in the storage unit 21 or the non-volatile memory in advance. In a case in which the timing is determined on the basis of the pulse count, the sorting machine 100 outputs the pulse count of the tray 121 from the encoder 124. In addition, the timing when the image data is acquired may be determined on the basis of an image sensor that separately reads the identification data of a target tray 121. In a case in which a plurality of readers 112 are provided in the loading unit 11 and the distances of the readers 112 to the camera 101 are different, the timing is determined for each reader 112.

The control unit 20 stores the image data acquired in Step S202 in the storage unit 21 so as to be associated with the identification code acquired in Step S201 and the imaging date and time (Step S203) and ends one image data collection process. The storage of the imaging time in Step S203 is not essential.

The data collection device 2 continuously performs the procedure of the process illustrated in the flowchart of FIG. 3 during operation. The image data collected in the storage unit 21 of the data collection device 2 is periodically read from the storage unit 21 by a maintenance agency for the sorting machine 100 and then used.

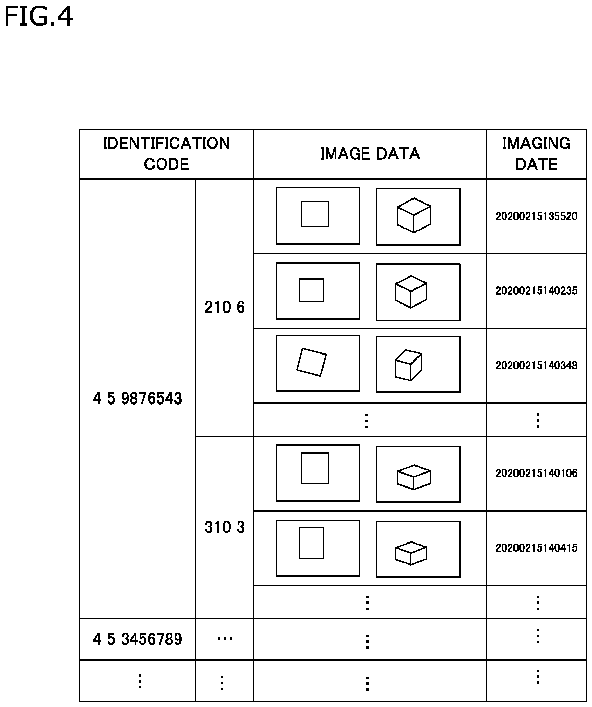

FIG. 4 is a diagram illustrating the content of the data collected by the data collection process. As illustrated in FIG. 4, a plurality of image data items obtained by the camera 101 are stored so as to be associated with the identification code read by the reader 112. As illustrated in FIG. 4, the imaging date and time may be associated with the image data. In addition, the identification code may be divided into upper digits and lower digits for each business operator. An image data ID for identifying each of the image data items may be stored so as to be associated the image data.

The EAN (JAN) code is used as the identification code, and a database that stores the correspondence between the EAN code and data, such as an article name, a manufacturer name, a product number, and a price, can be used together to identify an article, the country of manufacture of the article, and the manufacturer of the article. Since the image data is collected in association with the identification code, it is possible to collect the image data of the articles according to the difference between the types, manufacturers, and producers of various articles identified by the identification codes. Further, since the image data is collected in association with the imaging time, it is possible to collect the image data of the article according to the time when sorting is performed for transport. For example, even when a seasonal color or pattern package is used, it can be reflected in or excluded from learning.

### (Embodiment 2)

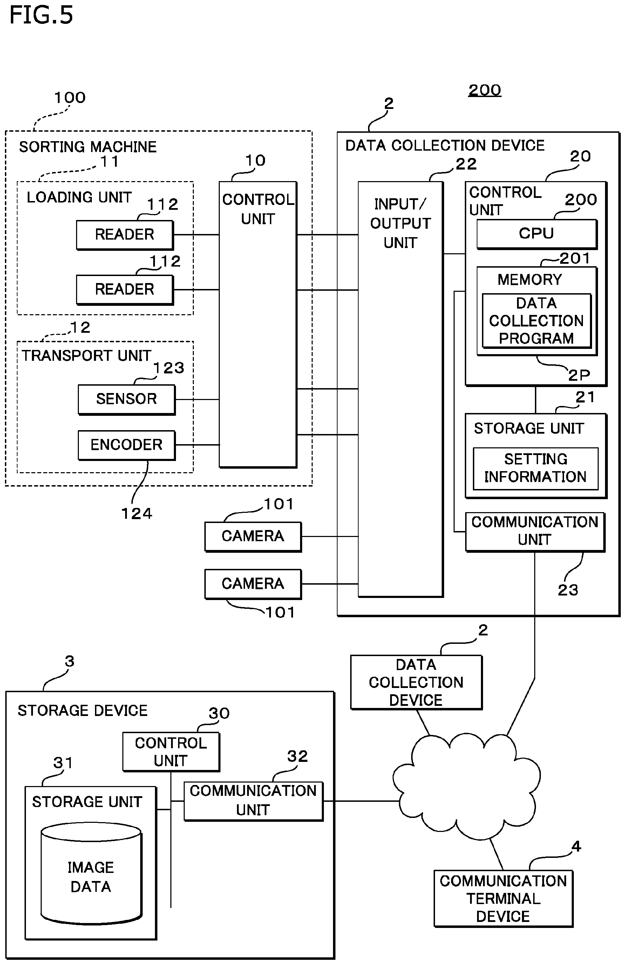

FIG. 5 is a block diagram illustrating the configuration of a data collection system 200 according to Embodiment 2. The data collection system 200 according to Embodiment 2 further includes a storage device 3 that receives the data collected by the data collection device 2 through a network N and stores the data. The data collection device 2 according to Embodiment 2 includes a communication unit 23 in addition to the control unit 20, the storage unit 21, and the input/output unit 22. The data collection device 2 stores setting information in the storage unit 21 and sequentially transmits the image data to the storage device 3 through the communication unit 23. A plurality of data collection devices 2 are provided and transmit image data to each sorting machine 100.

The communication unit 23 implements the transmission and reception of image data to and from the storage device 3 through the network N including the Internet. The communication unit 23 is, for example, a network card or a wireless communication module. The network N may include the Internet and a carrier network. The network N may be a dedicated line.

The storage device 3 includes a control unit 30, a storage unit 31, and a communication unit 32. The storage device 3 is a server computer. The storage device 3 is managed by, for example, the manufacturer of the sorting machine 100. The control unit 30 is a processor using a CPU and/or a graphics processing unit (GPU), is configured to include, for example, a built-in volatile memory and a clock, and performs a storage process.

The storage unit 31 includes a non-volatile storage medium such as an SSD or a hard disk. The collected image data is stored in the storage unit 31 so as to be associated with the identification code of the article included in the image data. The image data may be stored so as to be associated with the imaging time or may be stored so as to be associated with device identification data indicating the data collection device 2 which is a transmission source.

The communication unit 32 implements the transmission and reception of data to and from the data collection device 2 and a communication terminal device 4 through the network N. The communication unit 32 is for example, a network card or a wireless communication module.

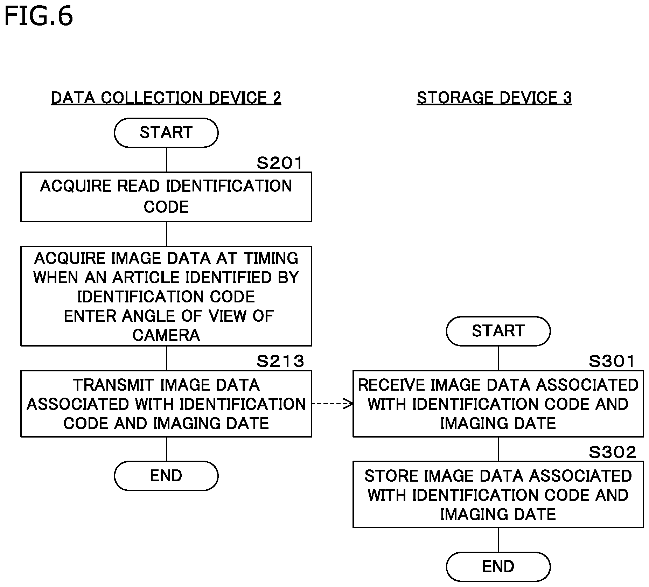

FIG. 6 is a flowchart illustrating a data collection process according to Embodiment 2. During operation, the control unit 20 of the data collection device 2 continuously performs the following process on the basis of the data collection program 2P, and the control unit 30 of the storage device 3 also continuously performs the following process. In the procedure of the process illustrated in the flowchart of FIG. 6, the detailed description of a procedure common to the procedure of the process illustrated in the flowchart of FIG. 3 will be omitted.

The control unit 20 of the data collection device 2 acquires the identification code read by the reader 112 whenever the identification code is received from the sorting machine 100 (S201) and acquires image data of the article identified by the acquired identification code from the camera 101 (S202).

The control unit 20 transmits the acquired image data to the storage device 3 through the communication unit 23 in association with the identification code acquired in Step S101 and the imaging date and time (Step S213) and ends the process corresponding to one article loading operation.

The control unit 30 of the storage device 3 receives the image data of the article associated with the identification code and the imaging date and time transmitted from the data collection device 2 (Step S301), stores the image data in the storage unit 31 (Step S302), and ends the process.

As described above, the image data of the article identified by the identification code is accumulated in the storage unit 31 of the storage device 3 so as to be associated with the identification code. The storage device 3 can collect the image data together with the identification code from a plurality of sorting points. The storage device 3 may store the accumulated image data without any change or may generate an identification model for identifying the article from the collected image data.

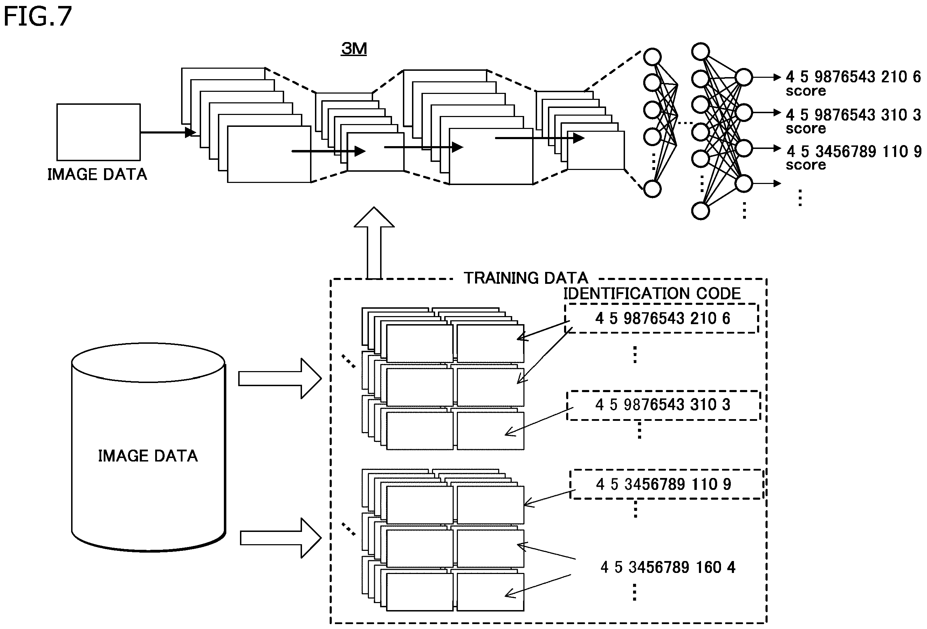

FIG. 7 is a schematic diagram illustrating an identification model 3M that is trained on the basis of the collected data. As illustrated in FIG. 7, the identification model 3M includes a convolution layer, a pooling layer, and a fully connected layer. The identification model 3M is trained so as to output data for identifying the article included in the image data and a score indicating the accuracy thereof on the basis of the feature amount of the input image data. The data for identifying the article may be a label suitable for training the identification model 3M. The data for identifying the article may be the identification code itself.

Training data is the image data collected in the storage unit 31 of the storage device 3. It is difficult for the identification model 3M to identify all articles from the beginning of learning. Therefore, the identification model 3M may be trained with the image data classified in advance on the basis of the identification code for each article to be sorted by the same sorting machine 100 at the same time in the same sorting operation, each article supplied from the same business operator, and each article that is provided by different business operators, but has a common classification. For example, the identification model 3M may extract only the image data, with which an identification code for the same kind of vegetables is associated such that fresh foods, such as vegetables to which identification codes are difficult to attach, can be identified by producer (business operator) and may learn the image data. In this case, the original identification code is printed on a tag attached to the fresh food. For example, the identification model 3M may narrow down the image data to image data of the articles sorted by the same sorting machine 100 at the same time such that the articles, which are likely to be accommodated together in the distribution material C, can be identified and may learn the image data. Alternatively, the identification model 3M may learn the image data by period or by season, using the date and time when the image data was captured.

The trained identification model 3M may be used in place of the reader 112 of the loading unit 11 of the sorting machine 100. The loading unit 11 includes an identification device including a camera, a storage unit that stores the identification model 3M, and a processing unit that performs an identification process, in place of the reader 112. This identification device inputs imaging data captured by the camera to the identification model 3M, identifies an article on the basis of identification data with the highest score indicating the accuracy output from the identification model 3M, and outputs the identification code to the control unit 10. Therefore, the sorting machine 100 can automatically perform sorting even when the sorting worker does not perform an operation with the sorting machine 100.

The storage device 3 can be connected to, for example, a personal computer, a tablet computer, or the communication terminal device 4 which is a point-of-sales (POS) terminal through the network N by communication. In the storage device 3, the image data, which is collected in the storage unit 31 of the storage device 3 and is the image data of the type or attribute (for example, the original manufacturer of the article) permitted to the user according to user identification data used in the communication terminal device 4, can be searched. The storage device 3 may receive a learning request and provide the trained identification model 3M to the communication terminal device 4 on the basis of the request. The storage device 3 can provide desired data, for example, by extracting and transmitting only the image data of an article of a specific original manufacturer. The storage device 3 can provide desired data by extracting the image data of only a specific type of article and transmitting the image data to the communication terminal device 4. In addition, the storage device 3 can provide data by extracting and transmitting only the image data of a specific article at a specific time.

For example, the communication terminal device 4 may be a terminal that is installed in a retail store and may be provided with the identification model 3M for automatically identifying the articles to be sold from the storage device 3. The communication terminal device 4 may be provided with the image data of only necessary articles from the storage device 3 together with the identification codes.

As described above, the image data collected by the sorting machines 100 at a plurality of positions is used for various purposes. The sorting machine 100 that reads the identification code and identifies the article can continuously collect new data and reflect information based on the collected image data in the retail store where the articles need to be identified.

### (Embodiment 3)

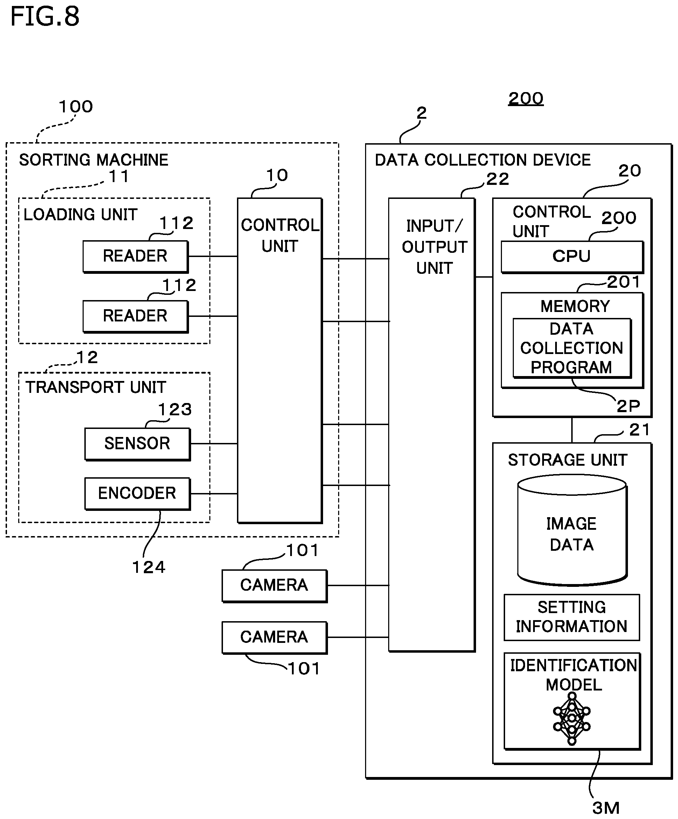

In Embodiment 3, data is collected using the identification model 3M that has been trained with the data collected by the data collection device 2. FIG. 8 is a block diagram illustrating the configuration of a data collection system 200 according to Embodiment 3. The configuration of the data collection system 200 in Embodiment 3 is the same as that in Embodiment 1 except that definition data of the identification model 3M is stored in the storage unit 21 of the data collection device 2 and a data collection method is different. Among the configurations of the data collection system 200 according to the following Embodiment 3, configurations common to those in Embodiment 1 are designated by the same reference numerals, and the detailed description thereof will be omitted.

The definition data of the identification model 3M stored in the storage unit 21 is parameters of the model trained on the basis of the image data collected in association with the identification code as described with reference to FIG. 7 in the second embodiment and network definition data. In a case in which image data obtained by imaging an article is input, the identification model 3M outputs the identification code of the article included in the image data and a score indicating accuracy. The identification model 3M may be classified in unit of learning. For example, the identification model 3M is classified for each manufacturer of the articles.

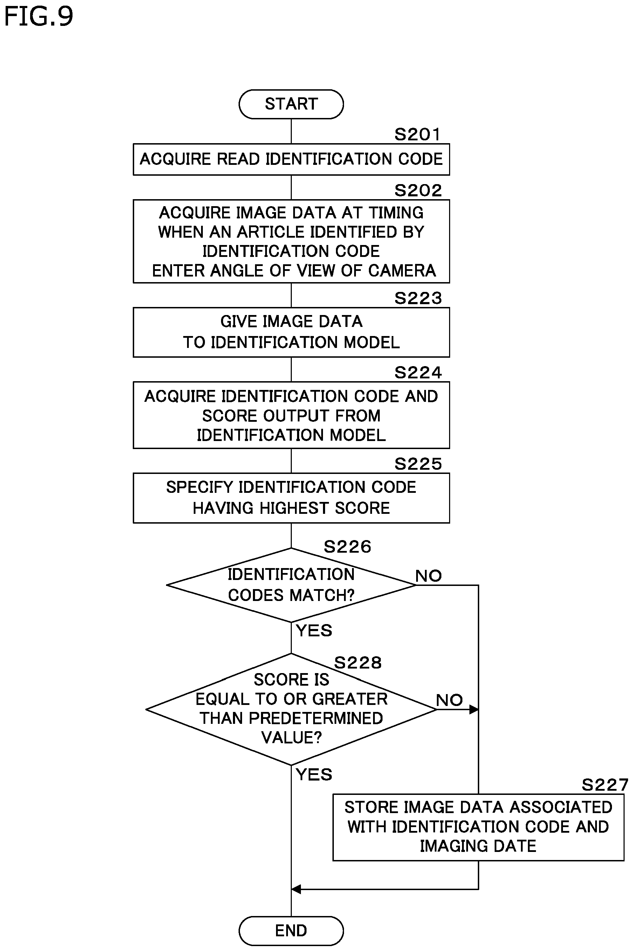

FIG. 9 is a flowchart illustrating an example of the procedure of a data collection process according to Embodiment 3. The control unit 20 of the data collection device 2 continuously performs the following process on the basis of the data collection program 2P during operation. In the procedure of the process illustrated in the flowchart of FIG. 9, the detailed description of a procedure common to the procedure of the process illustrated in the flowchart of FIG. 3 will be omitted.

The control unit 20 acquires the identification code read by the reader 112 whenever the identification code is received from the sorting machine 100 (S201) and acquires image data obtained by imaging the article identified by the acquired identification code from the camera 101. (S202).

The control unit 20 gives the image data acquired in Step S202 to the identification model 3M (Step S223) and acquires the identification code and the score indicating accuracy output from the identification model 3M (Step S224). The control unit 20 specifies an identification code having the highest score, that is, the highest accuracy output from the identification model 3M (Step S225).

The control unit 20 determines whether or not the identification code specified in Step S225 is matched with the identification code acquired in Step S201 (Step S226). In a case in which it is determined that the identification codes are not matched with each other (S226: NO), the control unit 20 stores the image data acquired in Step S202 in the storage unit 21 so as to be associated with the identification code acquired in Step S201 (Step S227). In this way, the image data is stored for re-training.

In a case in which it is determined in Step S226 that the identification codes are matched with each other (S226: YES), the control unit 20 determines whether or not the score indicating the accuracy corresponding to the identification code acquired in Step S224 is equal to or greater than a predetermined value (Step S228). In a case in which it is determined that the score indicating the accuracy is less than the predetermined value (S228: NO), the control unit 20 stores the image data acquired in Step S202 in the storage unit 21 so as to be associated with the identification code acquired in Step S201 (Step S227). In Step S227, the control unit 20 may store the image data so as to be further associated with the imaging date and time.

In a case in which it is determined in Step S228 that the score indicating the accuracy is equal to or greater than the predetermined value (S228: YES), the control unit 20 ends the process. In a case in which the score indicating the accuracy is equal to or greater than the predetermined value in Step S228 and the trained identification model 3M can accurately identify the article, the image data may not be collected for re-training.

The image data for re-training stored in the storage unit 21 is read from the storage unit 21 by the maintenance agency of the sorting machine 100 and is used to re-train the identification model 3M. In addition, in Embodiment 3, instead of storing the image data in the storage unit 21 in Step S227, the image data may be transmitted to the storage device 3 through the network N in association with the identification code.

Since the sorting machine 100 can constantly acquire the identification code and the image data which correspond to each other, it is possible to check the accuracy of the identification model 3M used elsewhere. For example, in a case in which the accuracy of identification is reduced due to a change in the appearance of the article or the like, it is possible to perform re-training.

Since the control unit 20 can acquire the identification code read by the reader 112, data collection may be triggered by that the imaging date and time associated with the image data already stored is earlier than a predetermined period and new data is required, in addition to that the accuracy is reduced.

The aspects of the data collection system 200 illustrated in Embodiments 1 to 3 are examples and may be appropriately combined.

The embodiments disclosed as described above are exemplary in all respects and are not restrictive. The scope of the invention is indicated by the claims and includes all modifications within the meaning and scope equivalent to the claims.

### [Description of Reference Numerals]

- 100: Sorting machine
- 10: Control unit
- 11: Loading unit
- 12: Transport unit
- 101: Camera
- 200: Data collection system
- 2: Data collection device
- 20: Control unit
- 21: Storage unit
- 2P: Data collection program
- 3: Storage device
- 31: Storage unit
- 3M: Identification model

## Claims

1. A data collection method comprising:
acquiring, from a sorting machine that includes a reader reading an identification code for identifying an article and transports the article to a different sorting destination on the basis of the identification code to sort the article, the identification code read by the reader;
acquiring image data of the article identified by the acquired identification code from a camera that is attached so as to image the article transported by the sorting machine; and
storing the acquired image data so as to be associated with the acquired identification code.

2. The data collection method according to claim 1,
wherein image data newly acquired from the camera is input to an identification model that has been trained to output data for identifying the article and accuracy on the basis of the stored image data and identification code in a case in which the image data is input,
it is determined whether or not the data output from the identification model is matched with the identification code read by the reader for the article captured in the image data and whether or not the accuracy is equal to or greater than a predetermined value, and
in a case in which it is determined that the accuracy is less than the predetermined value, the newly acquired image data is stored so as to be associated with the identification code.

3. A data collection system comprising:
a sorting machine that includes a reader reading an identification code for identifying an article and transports the article to a different sorting destination on the basis of the identification code to sort the article;
a camera that is attached so as to image the article transported by the sorting machine; and
a data collection device that is connected to the sorting machine and the camera and collects image data of the article,
wherein the data collection device acquires the identification code read by the reader,
acquires the image data of the article identified by the acquired identification code from the camera, and
stores the acquired image data in a storage unit so as to be associated with the acquired identification code.

4. A data collection device comprising:
a means connected to a sorting machine that includes a reader reading an identification code for identifying an article and transports the article to a different sorting destination on the basis of the identification code to sort the article;
a means for acquiring the identification code read by the reader;
a means for acquiring image data of the article identified by the acquired identification code from a camera that is attached so as to image the article transported by the sorting machine; and
a means for storing the acquired image data so as to be associated with the acquired identification code.

5. A data providing method comprising:
providing the image data in association with an identification code of an article from a storage device that stores data stored by the data collection method according to claim 1 or claim 2.

6. A computer program that causes a computer, which is connected to a sorting machine that includes a reader reading an identification code for identifying an article and transports the article to a different sorting destination on the basis of the identification code to sort the article, to execute:
acquiring the identification code read by the reader;
acquiring image data of the article identified by the acquired identification code from a camera that is attached so as to image the article transported by the sorting machine; and
storing the acquired image data so as to be associated with the acquired identification code.
